# EUROPÄISCHE PATENTSCHRIFT

(11) **EP 0 764 820 B1**
(45) Veröffentlichungstag und Bekanntmachung des Hinweises auf die Patenterteilung: **21.11.2001**
(21) Anmeldenummer: 96115139.6
(22) Anmeldetag: 20.09.1996
(51) Int. Cl.: F24J 2/00

(54) **Aussenwandaufbau für Gebäude, insbesondere Paneel**
Outer wall construction for a building, in particular a panel
Construction d'un mur extérieur de bâtiment, en particulier panneau

(30) Priorität: 21.09.1995 DE 19534999
(43) Veröffentlichungstag der Anmeldung: 26.03.1997
(73) Patentinhaber: NORSK HYDRO ASA, 0257 Oslo 2 (NO)
(72) Erfinder: Schulz, Harald Dr., D-86381 Krumbach (DE)
(74) Vertreter: Dziewior, Joachim

(56) Entgegenhaltungen:
- EP-A- 0 027 718
- WO-A-95/10741
- CH-A- 678 203
- FR-A- 2 291 462
- FR-A- 2 478 800
- US-A- 4 046 133

## Beschreibung

Die Erfindung betrifft einen Außenwandaufbau für Gebäude, inbesondere Paneel, wobei zur Nutzung von Solarenergie zwischen einer innenseitigen Wandschale und einer für Solarstrahlung durchlässigen, weitgehend transparenten außenseitigen Wandschale eine an letztere angrenzende, ebenfalls für Solarstrahlung durchlässige äußere Wärmedämmschicht angeordnet und diese durch eine aus der äußeren Wärmedämmschicht Solarstrahlung absorbierende Grenzfläche von einer zur innenseitigen Wandschale gehörenden inneren Wärmedämmschicht getrennt ist.

Bei einem aus WO 95/10741 bekannten Wandaufbau dieser Art sind der von der außenseitigen Wandschale gebildete Wärmedurchgangswiderstand und deren Gesamtenergiedurchlaßgrad, sowie der von der innenseitigen Wandschale mit ihrer inneren Wärmedämmschicht gebildete Wärmedurchgangswiderstand so aufeinander abgestimmt, daß durch die an der Grenzfläche absorbierte Solarenergie bei der zu erwartenden größtmöglichen Solareinstrahlung und der zu erwartenden maximalen sommerlichen Außentemperatur im Inneren des Wandaufbaus keine die Werkstoffe im Wandaufbau schädigenden hohen Temperaturen und an der Wandinnenoberfläche höchstens Temperaturen entstehen, die von im Rauminneren befindlichen Personen noch als behaglich empfunden werden. Diese Abstimmung erfordert in der Regel eine Anpassung des Wärmedurchgangskoeffizienten k und des Gesamtenergiedurchlaßgrades g der zumeist als Verglasung ausgebildeten transparenten außenseitigen Wandschale, so daß deren k- und g-Werte häufig keinen ausreichenden Spielraum mehr lassen, um durch die Ausbildung der außenseitigen Wandschale das von einem Betrachter von außen wahrgenommene visuelle Erscheinungsbild des Außenwandaufbaus im Wand- und Brüstungsbereich noch nach Wunsch gestalten zu können.

Der Erfindung liegt die Aufgabe zugrunde, einen Wandaufbau der eingangs genannten Art so auszubilden, daß das von außen gesehene visuelle Erscheinungsbild des Wandaufbaus auch bei vorgegebener Ausbildung der transparenten außenseitigen Wandschale noch nach Wunsch beeinflußt und bestimmt werden kann.

Diese Aufgabe wird bei einem Wandaufbau mit den eingangs genannten Merkmalen durch die im Kennzeichnen den Teil von Anspruch 1 angegebenen Merkmale gelöst. Weiterbildungen des gegenstands nach Anspruch 1 sind gegenstand abhängigen Ansprüche.

Bei dem erfindungsgemäßen Wandaufbau erfolgt die Absorption der einfallenden Sonnenstrahlung im wesentlichen in der die transparente äußere Wärmedämmschicht zur Seite der inneren Wärmedämmschicht hin begrenzenden Grenzfläche, an der somit bei Sonneneinstrahlung in der Regel die höchsten Temperaturen innerhalb des Wandaufbaus auftreten. Die Grenzfläche kann dabei sehr dünn, etwa eine Folie, ein Film oder eine Beschichtung sein, wenn sie nur für die Solarstrahlung weitgehend undurchlässig ist. Die erfindungsgemäße Abstimmung der im Anspruchskennzeichen genannten Größen kann durch einen gewollt verringerten Wert des Gesamtenergiedurchlaßgrades g der außenseitigen Wandschale und/oder des Absorptionsgrades alpha an der Grenzfläche eine geringere Aufnahme an Solarenergie im Wandaufbau zur Folge haben, gewährleistet aber bei gleichwohl guter Nutzung der Solarenergie, daß auch bei höchstmöglicher Sonneneinstrahlung der maximale Temperaturwert Tₜₘₐₓ im Wandaufbau nicht überschritten wird, so daß Materialzerstörungen nicht auftreten können. Gleichzeitig kann durch diese erfindungsgemäße Abstimmung überraschenderweise aber außerdem erreicht werden, daß die Temperatur an der Wandinnenoberfläche nicht größer als der Wert Tₒᵢₘₐₓ werden kann, so daß diese Temperatur und der an der Wandinnenseite zur Rauminnenluft hin auftretende, durch den Wärmeübergangswiderstand 1/alphaᵢ bedingte Temperatursprung auch bei maximaler Sonneneinstrahlung in Bereichen liegen, die von im Rauminneren sich aufhaltenden Personen noch als behaglich empfunden werden. Die im Rahmen dieser Abstimmung erforderlichen Werte des Wärmedurchgangswiderstandes Rᵢ der innenseitigen Wandschale mit ihrer inneren Wärmedämmschicht sind unschwer durch Schichtdicken erreichbar, welche die Bautiefe und den konstruktiven und kostenmäßigen Aufwand des erfindungsgemäßen Wandaufbaus insgesamt nicht über das vergrößern müssen, was für den Wert R_{gmin} des Wärmedurchgangswiderstandes des gesamten Wandaufbaus ohnehin erforderlich ist, damit auch des Nachts und bei minimaler Außentemperatur eine ausreichende Wärmedämmung besteht, also die Temperatur an der Wandinnenfläche den bezüglich Behaglichkeit und Tauwasserrisiko minimalen Wert nicht unterschreitet. - Die im Rahmen der Größenabstimmung bestehende Möglichkeit, den g-Wert der außenseitigen Wandschale und äußeren Wärmedämmschicht bewußt zu verringern, kann in Verbindung mit der absorbierenden Grenzfläche im übrigen dazu genutzt werden, das äußere Erscheinungsbild des Wandaufbaus zu optimieren, worin ein weiterer wichtiger Vorteil der Erfindung zu sehen ist. Die reduzierten g-Werte verringern nämlich die Durchsicht durch die außenseitige Wandschale, erschweren also die Einsicht von außen in den hinter der außenseitigen Wandschale befindlichen Wandaufbau, wodurch Anforderungen an die Ästhetik des Erscheinungsbildes des Wandaufbaus leichter erfüllt werden können.

Um die genannten Forderungen (Einhalten bestimmter Grenzen für die maximal auftretende Temperatur im Wandaufbau und die maximal auftretende Innenoberflächentemperatur) einhalten zu können, muß mit steigendem Wärmedurchgangswiderstand Rₐ der äußeren Wandschale und der äußeren Wärmedämmschicht der Anteil der an der Grenzfläche aufgenommenen Solarenergie durch Reduzierung des g-Wertes und/oder der Absorption an der Grenzfläche verringert werden. Die Reduzierung von g und/oder alpha ermöglicht gleichzeitig bei gegebenem Rₐ eine zunehmende Erweiterung des zulässigen Bereichs für den Wärmedurchgangswiderstand Rᵢ der inneren Wandschale nach unten und nach oben.

Im einzelnen ist diese Größenabstimmung durch die im Anspruch 2 enthaltene Tabelle 1 zu machen. Ausführungen des Wandaufbaus, die sich dabei durch eine besonders gute Solarenergienutzung auszeichnen, sind durch den Anspruch 3 und die in ihm enthaltene Tabelle 2 erreichbar. Diese Tabellen gelten unter den Voraussetzungen Tₘₐₓ = 120°C, Tₒᵢₘₐₓ = 36°C, Tₐₘₐₓ =30°C, Tᵢ = 20°C, wobei Tₐₘₐₓ die höchste zu erwartende sommerliche Außentemperatur und Tᵢ die Innentemperatur bedeuten, und für eine Süd/West-Orientierung des Wandaufbaus mit einer zu erwartenden maximalen Solareinstrahlung von qₛₘₐₓ = 700 W/m². In der Tabelle 1 sind für alpha gleich 0,2; 0,4; 0,6 und 0,8 jeweils in Abhängigkeit von Rₐ (erste Spalte) und alpha*g (zweite Spalte) der zulässige Maximalwert (dritte Spalte) und Minimalwert (vierte Spalte) für Rᵢ zusammengestellt. Zwischenwerte können durch Interpolationen ohne weiteres ermittelt werden. In der Tabelle 2 ist für ausgesuchte und bsonders bevorzugte Fälle außer den jeweiligen Rₐ-, alpha-, g- und Rᵢ-Werten in der letzten Spalte die Eignung für die Nutzung der Solarenergie in drei Stufen +, ++ und +++ gekennzeichnet, wobei der Nutzungsgrad mit der Anzahl der Plus-Zeichen zunimmt.

Die Werte von Rₐ, Rᵢ, alpha und g gemäß der Tabellen 1 und 2 hängen natürlich vom Wert qₛₘₐₓ der zu erwartenden höchstmöglichen Sonneneinstrahlung ab. Dieser Wert ist je nach der Orientierung des Wandaufbaus nach den Himmelsrichtungen verschieden; bei Orientierung nach Süden ist er am größten, bei Orientierung nach Norden am kleinsten. Die Erfindung empfiehlt, diese Richtungsabhängigkeit gemäß Anspruch 4 auszunützen, also bei der Größenabstimmung für einen bespielsweise nach Norden gerichteten Wandaufbau den dafür wesentlich kleineren Wert qₛₘₐₓ als für Südrichtung zu berücksichtigen, um auf diese Weise erheblich kleinere k- und k_{eq}- Werte für den Wandaufbau zu ermöglichen, als sich bei Verwendung des qₛₘₐₓ-Wertes für Südrichtung ergeben würden.

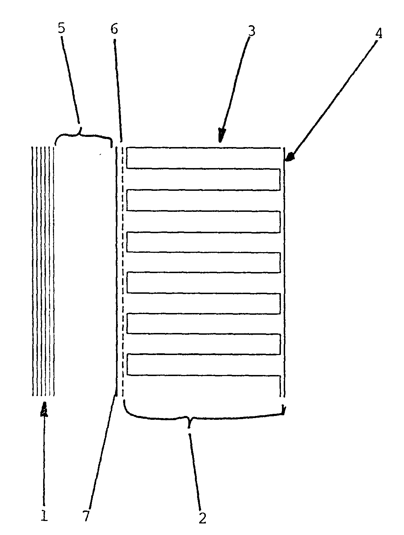

Die im Rahmen der Erfindung durch eine absichtliche Verringerung des Wertes für alpha*g (hier wie im folgenden bedeutet * das Multipikationszeichen) der außenseitigen Wandschale weniger aufgenommene Solarstrahlung wird durch die Anpassung des Wärmedurchgangskoeffizienten k = 1/Rₐ dieser Wandschalung optimal genutzt, indem der entsprechend verringerte k-Wert den Wärmeverlust von der absorbierenden Grenzfläche nach außen durch die äußere transparente Wärmedämmschicht und die außenseitige Wandschale hindurch begrenzt. Im folgenden wird ein Ausführungsbeispiel der Erfindung anhand der Zeichnung näher erläutert; die einzige Figur zeigt einen Querschnitt durch den Wandaufbau eines erfindungsgemäßen Wandpaneels in lediglich schematischer Darstellung.

In der Zeichnung ist die außenseitige Wandschale mit 1 bezeichnet. Sie kann als Einfach-, Zweifach- oder Dreifachglasscheibe ausgebildet sein, wobei im übrigen Wärmeschutz- und/oder Sonnennschutzbeschichtungen sowie den g-Wert beeinflussende Beschichtungen vorhanden sein können, die aber hier im einzelnen nicht weiter beschrieben zu werden brauchen. Zu dem in der Zeichnung auf der rechten Seite liegenden Innenraum hin besitzt das Paneel eine innenseitige Wandschale 2, zu der eine innere Wärmedämmschicht 3 gehört, die auf der Innenraumseite durch eine weitgehend dampfdichte Wandschicht 4, beispielsweise ein Blech, abgeschlossen sein kann. An die außenseitige Wandschale 1 schließt sich in Richtung zum Innenraum hin eine äußere Wärmedämmschicht 5 an, die wie die außenseitige Wandschale 1 für die Solarstrahlung durchlässig ist und zumeist von einer Luftschicht gebildet ist, aber auch transparente Gläser, transparente Kunststoffe, transparente Kapillarplatten usw. enthalten kann. Diese äußere Wärmedämmschicht 5 ist von der inneren Wärmedämmschicht 3 durch eine Grenzfläche 6 getrennt, an der Solarstrahlung aus der äußeren Wärmedämmschicht 5 absorbiert wird.

Um den visuellen Eindruck, den ein Betrachter wahrnimmt, der von außen, in der Zeichnung also von links her, gegen die außenseitige Wandschale 1 blickt, nach Wunsch zu beeinflussen und zu bestimmen, ist die Grenzfläche 6 an ihrer der äußeren Wärmedämmschicht zugekehrten Oberfläche mit einer farblichen und/oder strukturellen Gestaltung versehen, welche die spektrale Absorption und Reflektion der Solarstrahlung an der Grenzfläche 6 so beeinflußt, daß im Ergebnis der gewünschte visuelle Eindruck des Außenwandelementes in der Ansicht von außen entsteht. Im einzelnen kann diese farbliche und/oder strukturelle Gestaltung durch eine Beschichtung oder durch eine Oberflächenveredelung der Grenzfläche 6 gebildet sein. Die Grenzfläche 6 kann auch auf ihrer der äußeren Wärmedämmschicht 5 zugekehrten Oberfläche mit einem im wesentlichen flächen haften Gebilde 7 als Träger der farblichen und/oder strukturellen Gestaltung versehen sein. Dieses im wesentlichen flächenhafte Gebilde 7 kann aus einem Blech aus Metall oder Kunststoff, einer Platte aus Holz, Kunststoff oder aus einem anderen geeigneten wärmedämmenden Werkstoff, einer Scheibe aus Glas, einer Kunststoffolie oder dergleichen bestehen. Die farbliche Gestaltung kann von Farbfeldern oder -bereichen gebildet sein, die unterschiedliche Farben besitzen. Sie kann aber auch aus einer monochromen, sich über die gesamte Paneelfläche erstreckenden Färbung gebildet sein. Die strukturelle Gestaltung kann z. B. durch eine reliefartige Ausformung der Oberfläche des Trägers 27 erreicht werden.

Empfehlenswert sind die zur jeweils optimalen Anpassung des k-Wertes und des g-Wertes an die jeweils bestehenden Erfordernisse, nämlich hinsichtlich der an der absorbierenden Grenzfläche 6 und an der Wandinnenoberfläche auftretenden Maximaltemperaturen Tₜₘₐₓ und Tₒᵢₘₐₓ zweckmäßig die an Hand der Tabellen ableitbaren Kombinationen.

Die zulässigen Zuordnungen von Rₐ, alpha, g und Rᵢ für süd- und westorientierte Wandflächen sind in den Tabellen 1 und 2 in der schon früher erläuterten Weise zusammengestellt. Zwischen den zu gegebenem alpha, Rₐ und g jeweils angegebenen beiden Grenzwerten kann Rᵢ frei gewählt werden. Die von Fall zu Fall erreichbare Nutzung der Solarenergie ist in der letzten Spalte von Tabelle 2 bewertet, wobei die Bewertung auf folgender Grundlage mit k_{statisch} = 1/R_{g} beruht:

Maßstab ist jeweils eine südorientierte Wand
- x =: gut (k_{equ} = 0,16 - 0,25 W/m²K, k_{equ} ≤ 1/2 k_{statisch})
- xx =: sehr gut (k_{equ} = 0,06 - 0,15 W/m²K, k_{equ} ≤ 1/3 k_{statisch})
- xxx =: hervorragend (k_{equ} ≤ 0,05 W/m²K, k_{equ} ≤ 1/8 k_{statisch})

## Patentansprüche

1. Außenwandaufbau für Gebäude, inbesondere Paneel, wobei zur Nutzung von Solarenergie zwischen einer innenseitigen Wandschale (2) und einer für Solarstrahlung durchlässigen, weitgehend transparenten außenseitigen Wandschale (1) eine an letztere angrenzende, ebenfalls für Solarstrahlung durchlässige äußere Wärmedämmschicht (5) angeordnet und diese durch eine aus der äußeren Wärmedämmschicht (5) Solarstrahlung absorbierende Grenzfläche (6) von einer zur innenseitigen Wandschale (2) gehörenden inneren Wärmedämmschicht (3) getrennt ist, **dadurch gekennzeichnet, daß** die Grenzfläche (6) an ihrer der äußeren Wärmedämmschicht (5) zugekehrten Oberfläche eine nach gestalterischen bzw. ästhetischen Gesichtspunkten frei wählbare farbliche und/oder strukturelle Gestaltung aufweist, die das von außen gegen die außenseitige Wandschale (1) gesehene visuelle Erscheinungsbild des Außenwandaufbaus bestimmt.

2. Außenwandaufbau nach Anspruch 1, bei dem die Grenzfläche (6) einen Bruchteil alpha der Solarstrahlung aus der äußeren Wärmedämmschicht (5) absorbiert, wobei die Summe R_{g} des von der außenseitigen Wandschale (1) und der äußeren Wärmedämmschicht (5) gebildeten Wärmedurchgangswiderstandes Rₐ und des von der innenseitigen Wandschale (2) mit ihrer inneren Wärmedämmschicht (3) gebildeten Wärmedurchgangswiderstands Rᵢ einen Mindestwert R_{gmin} besitzt, der so groß ist, daß bei fehlender Sonneneinstrahlung und der zu erwartenden minimalen Außenlufttemperatur (Winter/Nacht) die Temperatur an der Wandinnenoberfläche des Wandaufbaus einen bezüglich Behaglichkeit und Tauwasserrisiko minimalen Wert nicht unterschreitet, **dadurch gekennzeichnet, daß** der von der außenseitigen Wandschale (1) und der äußeren Wärmedämmschicht (5) gebildete Wärmedurchgangswiderstand Rₐ und deren Gesamtenergiedurchlaßgrad g, ferner der Absorptionsgrad alpha an der Grenzfläche (6) und der von der innenseitigen Wandschale (2) mit ihrer inneren Wärmedämmschicht (3) gebildete Wärmedurchgangswiderstand Rᵢ so aufeinander abgestimmt sind, daß bei der am Einbauort zu erwartenden größtmöglichen Solareinstrahlung qₛₘₐₓ und der zu erwartenden maximalen sommerlichen Außentemperatur Tₐₘₐₓ sowohl im Inneren des Wandaufbaus, insbesondere an der Grenzfläche (6), höchstens eine Maximaltemperatur Tₜₘₐₓ entsteht, die von den Werkstoffen im Wandaufbau noch ohne Schädigung ertragen wird, als auch an der Wandinnenoberfläche höchstens eine maximale Temperatur Tₒᵢₘₐₓ entsteht, die von im Rauminneren befindlichen Personen noch als behaglich empfunden wird, wozu bei gegebenen Werten von Rₐ, alpha und alpha*g (* bedeutet hier wie im folgenden das Multiplikationszeichen) eines nach Süden oder Westen orientierten Wandaufbaus die Werte von Rᵢ zwischen den aus nachstehender Tabelle (Tabelle 1) zu entnehmenden Grenzen liegen: 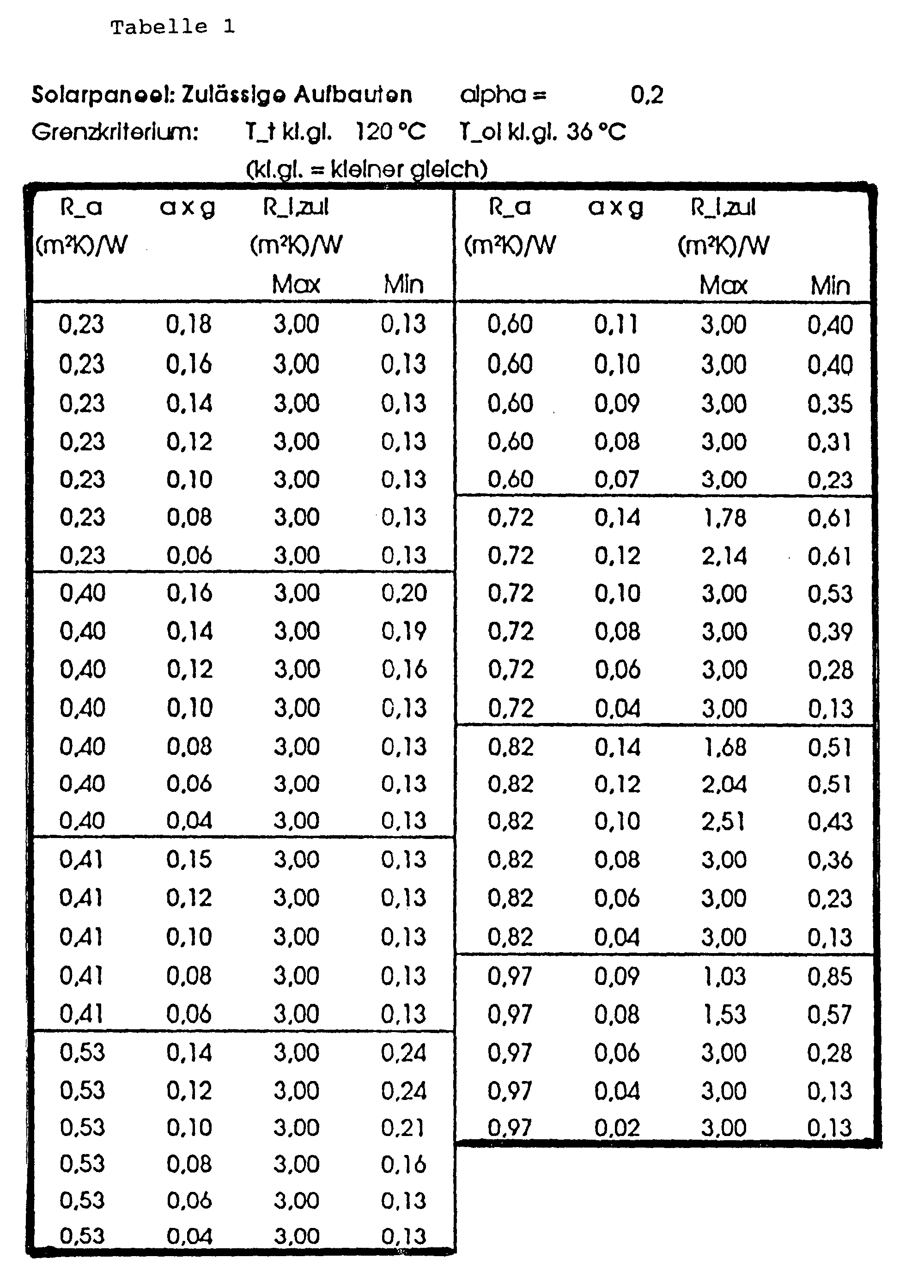 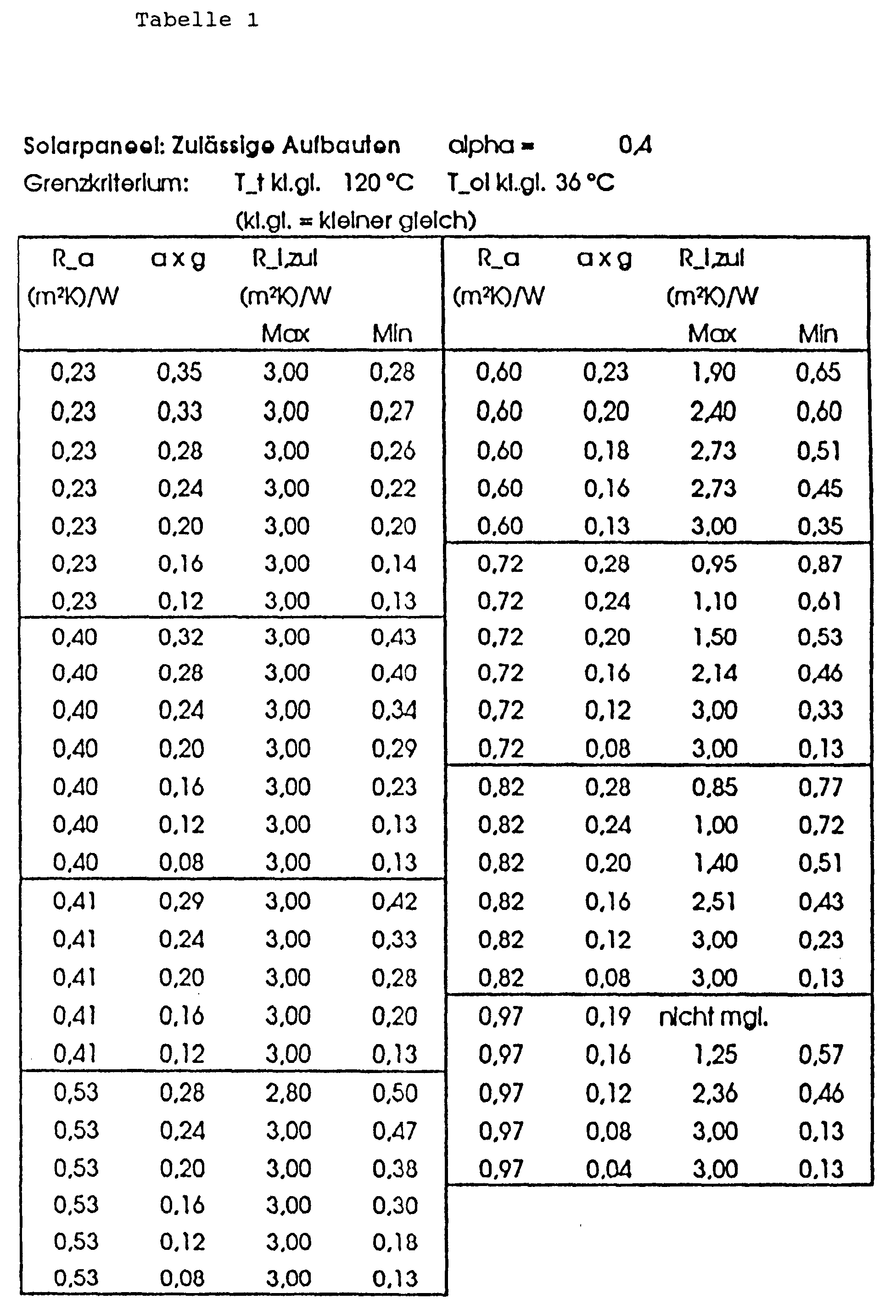 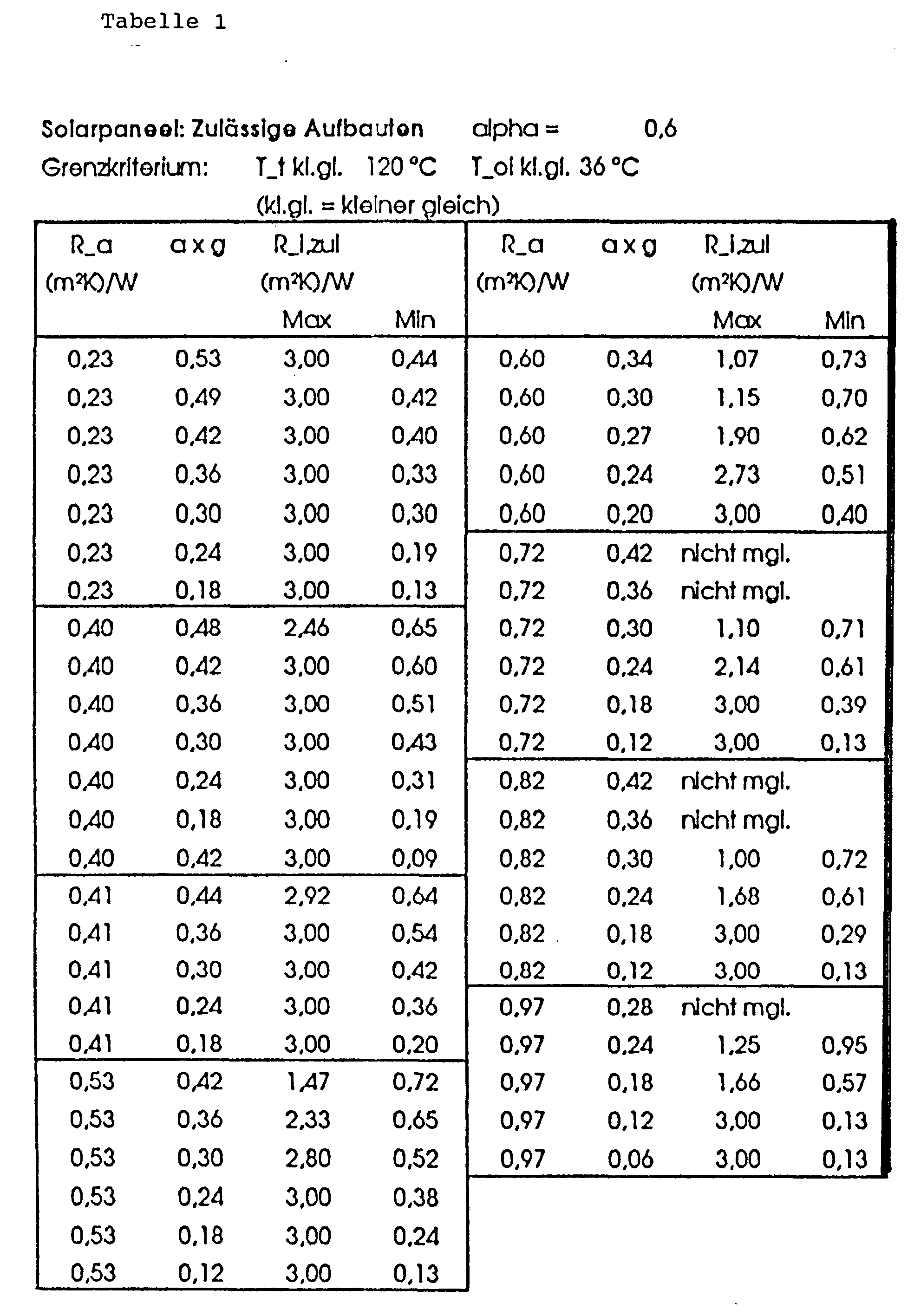 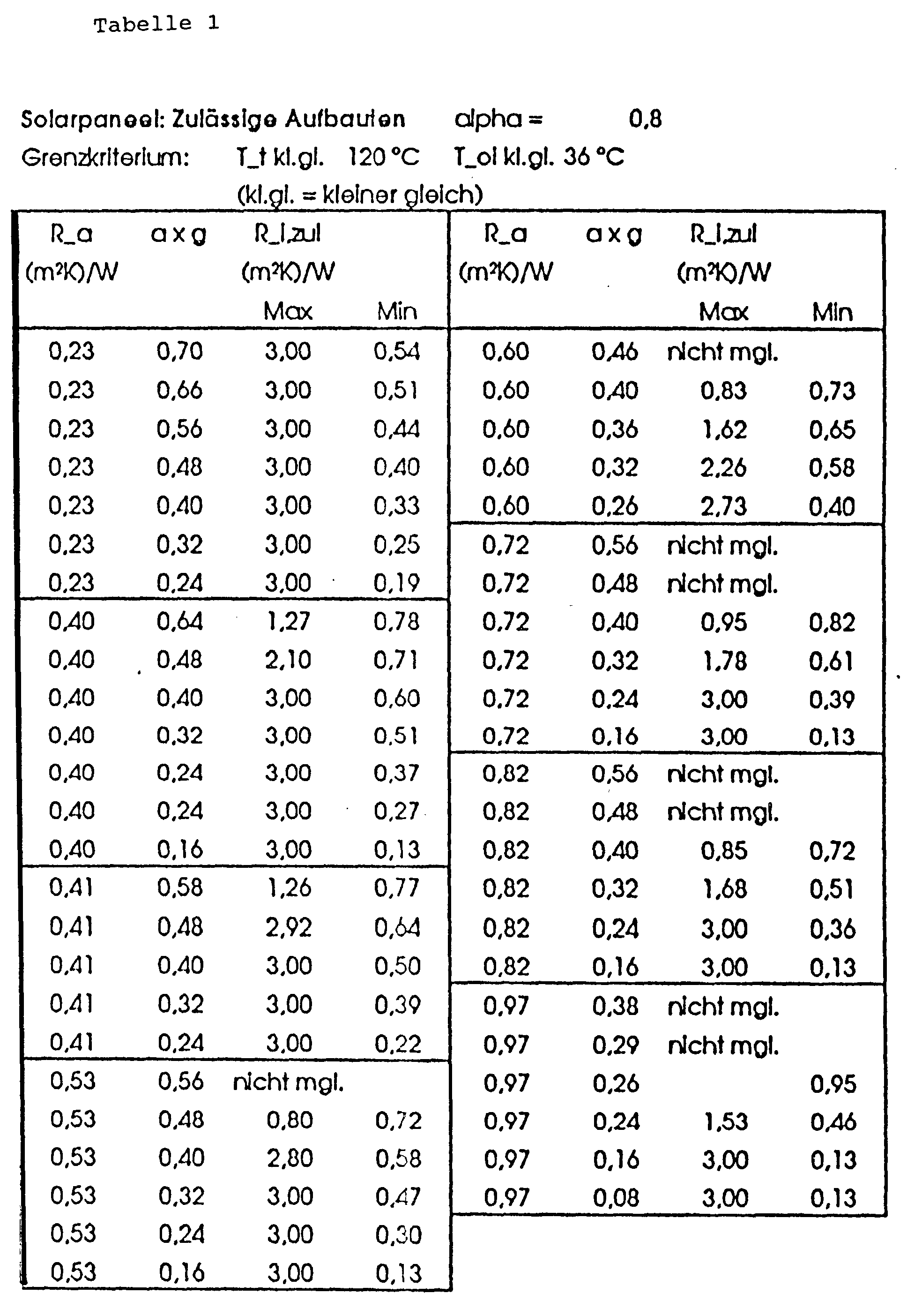 wobei in der Tabelle für alpha gleich 0,2; 0,4; 0,6 und 0,8 jeweils in Abhängigkeit von Rₐ (erste Spalte) und alpha*g (zweite Spalte) der zulässige Maximalwert (dritte Spalte) und Minimalwert (vierte Spalte) für Rᵢ zusammengestellt sind und Zwischenwerte durch Interpolationen ohne weiteres ermittelt werden können.

3. Außenwandaufbau nach Anspruch 2, **dadurch gekennzeichnet, daß** der Wandaufbau in der nachstehenden Tabelle (Tabelle 2) aufgeführten Werte von alpha*g und Rₐ sowie einen Rᵢ-Wert besitzt, der in dem jeweils zu diesen Werten von alpha*g und Rₐ gehörenden, in der Tabelle 2 angegebenen Rᵢ-Bereich liegt:

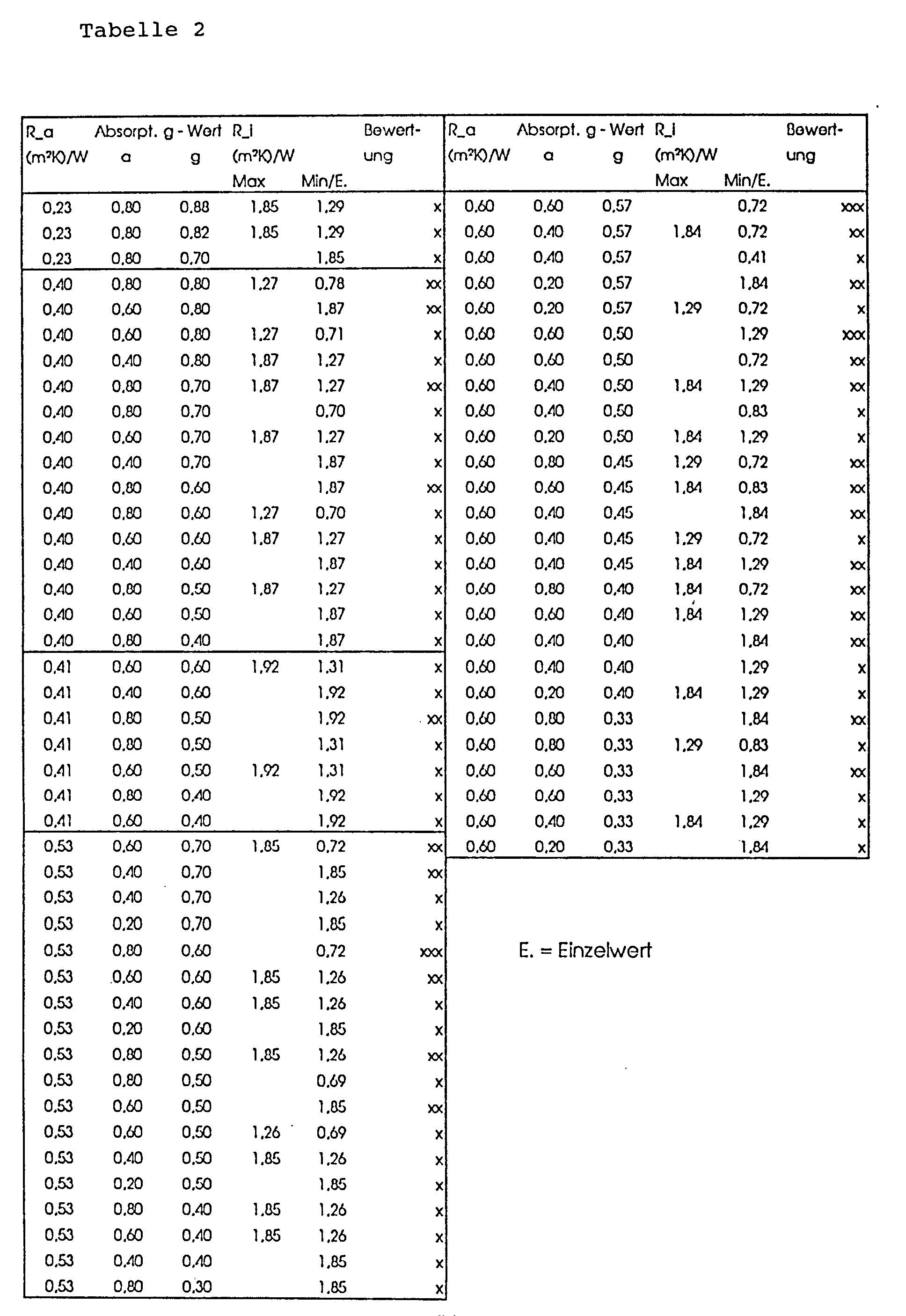

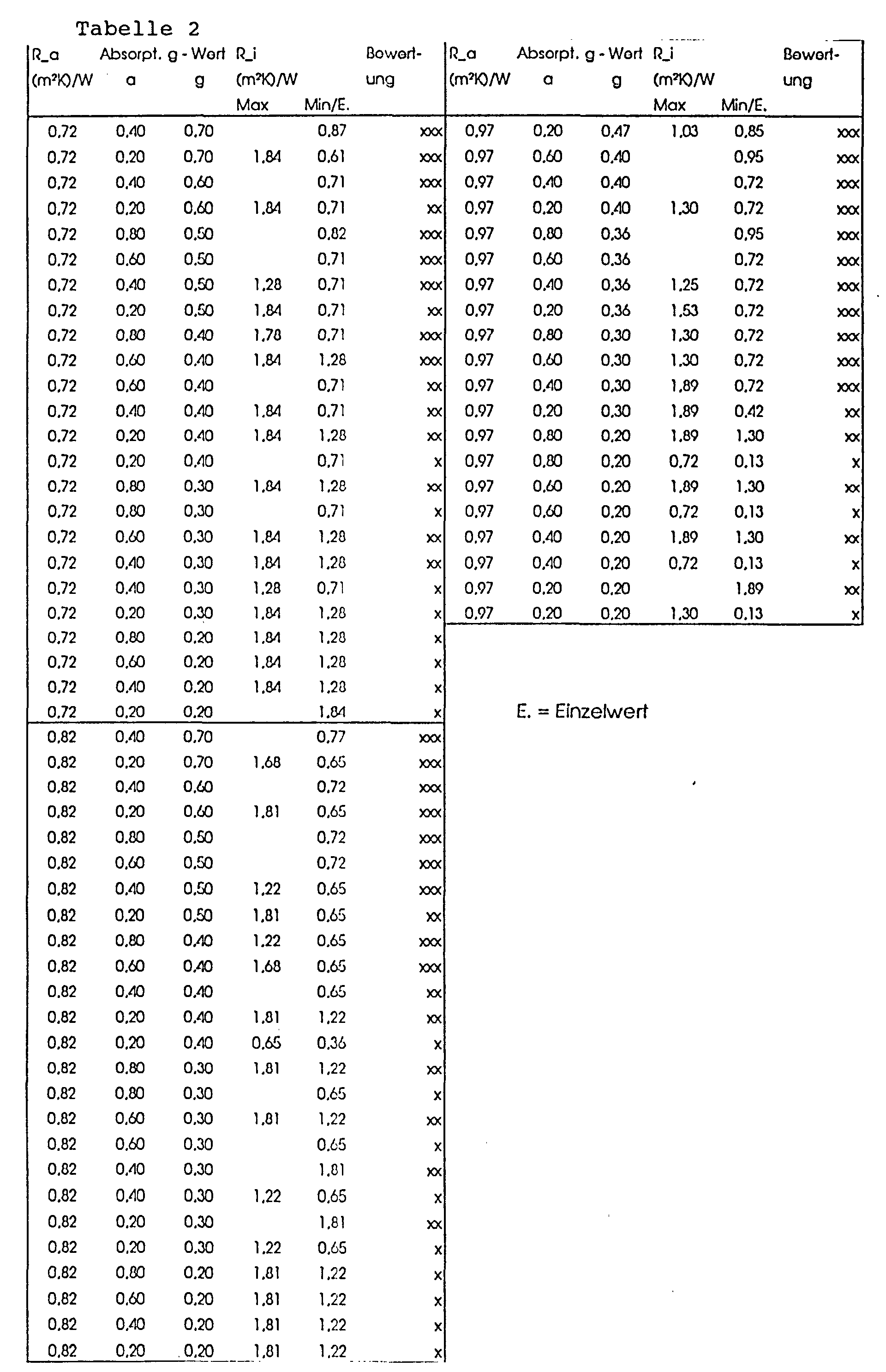

4. Außenwandaufbau nach einem der Ansprüche 2 oder 3, **dadurch gekennzeichnet, daß** bei der gegenseitigen Abstimmung der Größen Rₐ, Rᵢ, alpha und alpha*g der zu erwartende höchstmögliche Wert qₛₘₐₓ der Sonneneinstrahlung für diejenige Himmelsrichtung angesetzt wird, die der Richtungsorientierung des Außenwandaufbaus am Gebäude entspricht.

5. Außenwandaufbau nach einem der Ansprüche 1 bis 4, **dadurch gekennzeichnet, daß** die farbliche und/oder strukturelle Gestaltung durch eine Beschichtung der Grenzfläche (6) gebildet ist.

6. Außenwandaufbau nach einem der Ansprüche 1 bis 4, **dadurch gekennzeichnet, daß** die farbliche und/oder strukturelle Gestaltung durch eine Oberflächenveredelung der Grenzfläche (6) gebildet ist.

7. Außenwandaufbau nach einem der Ansprüche 1 bis 6, **dadurch gekennzeichnet, daß** die Grenzfläche (6) auf ihrer der äußeren Wärmedämmschicht (5) zugekehrten Oberfläche ein im wesentlichen flächenhaftes Gebilde (7) als Träger der farblichen und/oder strukturellen Gestaltung aufweist.

8. Außenwandaufbau nach Anspruch 7, **dadurch gekennzeichnet, daß** das im wesentlichen flächenhafte Gebilde (7) aus einem Blech, einer Platte, einer Scheibe oder einer Folie besteht.

9. Außenwandaufbau nach einem der Ansprüche 1 bis 8, **dadurch gekennzeichnet, daß** die farbliche Gestaltung von monochromen oder polychromen Farbfeldern oder -bereichen gebildet ist.

10. Außenwandaufbau nach einem der Ansprüche 1 bis 9, **dadurch gekennzeichnet, daß** die strukturelle Gestaltung durch eine reliefartig geformte Oberfläche gebildet ist.

## Claims

1. An outside wall structure for buildings, in particular panels, wherein for using solar energy arranged between an inward wall shell (2) and a substantially transparent outward wall shell (1) which is transmissive for solar radiation is an outer heat insulating layer (5) which adjoins the outward wall shell (1) and which is also transmissive for solar radiation and the outer heat insulating layer is separated from an inner heat insulating layer (3) belonging to the inward wall shell (2) by an interface (6) for absorbing solar radiation from the outer heat insulating layer (5), **characterised in that** at its surface towards the outer heat insulating layer (5) the interface (6) involves a colour and/or structural design which can be freely selected from creative or aesthetic points of view and which determines the visual appearance of the outside wall structure as seen from the outside on to the outward wall shell (1).

2. An outside wall structure according to claim 1 wherein the interface (6) absorbs a fraction alpha of the solar radiation from the outer heat insulating layer (5), wherein the sum R_{g} of the heat transfer resistance Rₐ formed by the outward wall shell (1) and the outer heat insulating layer (5) and the heat transfer resistance Rᵢ formed by the inward wall shell (2) with its inner heat insulating layer (3) is of a minimum value R_{gmin} which is of such a magnitude that in the absence of solar radiation and with the minimum outside air temperature (winter/night) to be expected the temperature at the inside wall surface of the wall structure does not fall below a minimum value in respect of comfortableness and the risk of condensation water, **characterised in that** the heat transfer resistance Rₐ formed by the outward wall shell (1) and the outer heat insulating layer (5) and the overall energy transmittance g thereof, and in addition the degree of absorption alpha at the interface (6) and the heat transfer resistance Rᵢ formed by the inward wall shell (2) with the inner heat insulating layer (3) thereof are so matched to each other that at the greatest possible solar radiation qₛₘₐₓ to be expected at the location of installation and the maximum summertime outside temperature Tₐₘₐₓ to be expected, both in the interior of the wall structure and in particular at the interface (6) there is at most a maximum temperature Tₜₘₐₓ which is still tolerated by the materials in the wall structure without damage, and at the inside wall surface there is at most a maximum temperature Tₒᵢₘₐₓ which is still perceived as comfortable by persons in the interior of the room, in which respect with given values of Rₐ, alpha and alpha*g (* denotes here as in hereinafter the multiplication sign) of a wall structure which is oriented towards the South or the West the values of Rᵢ are between the limits to be found in the Table hereinafter (Table 1): 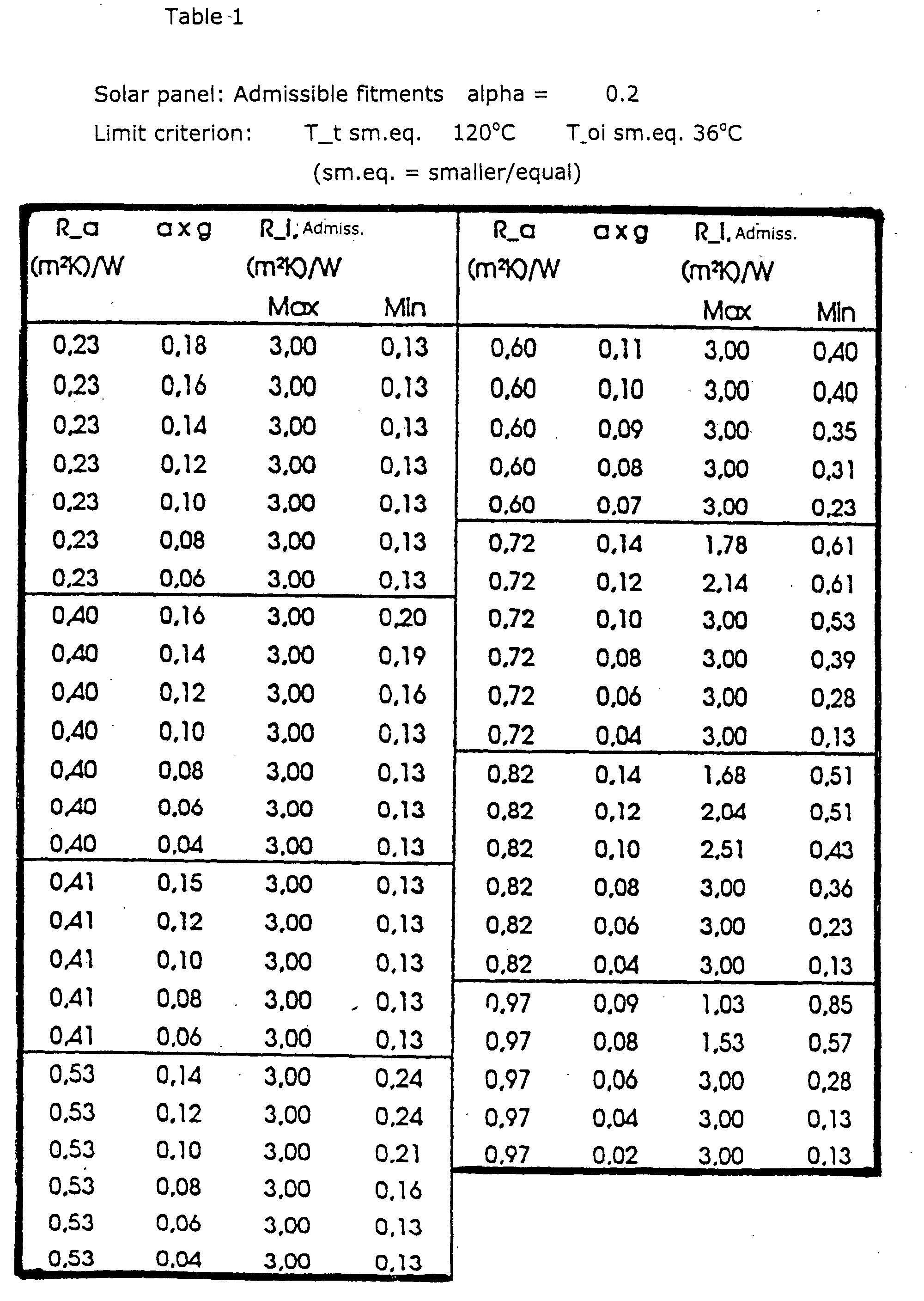 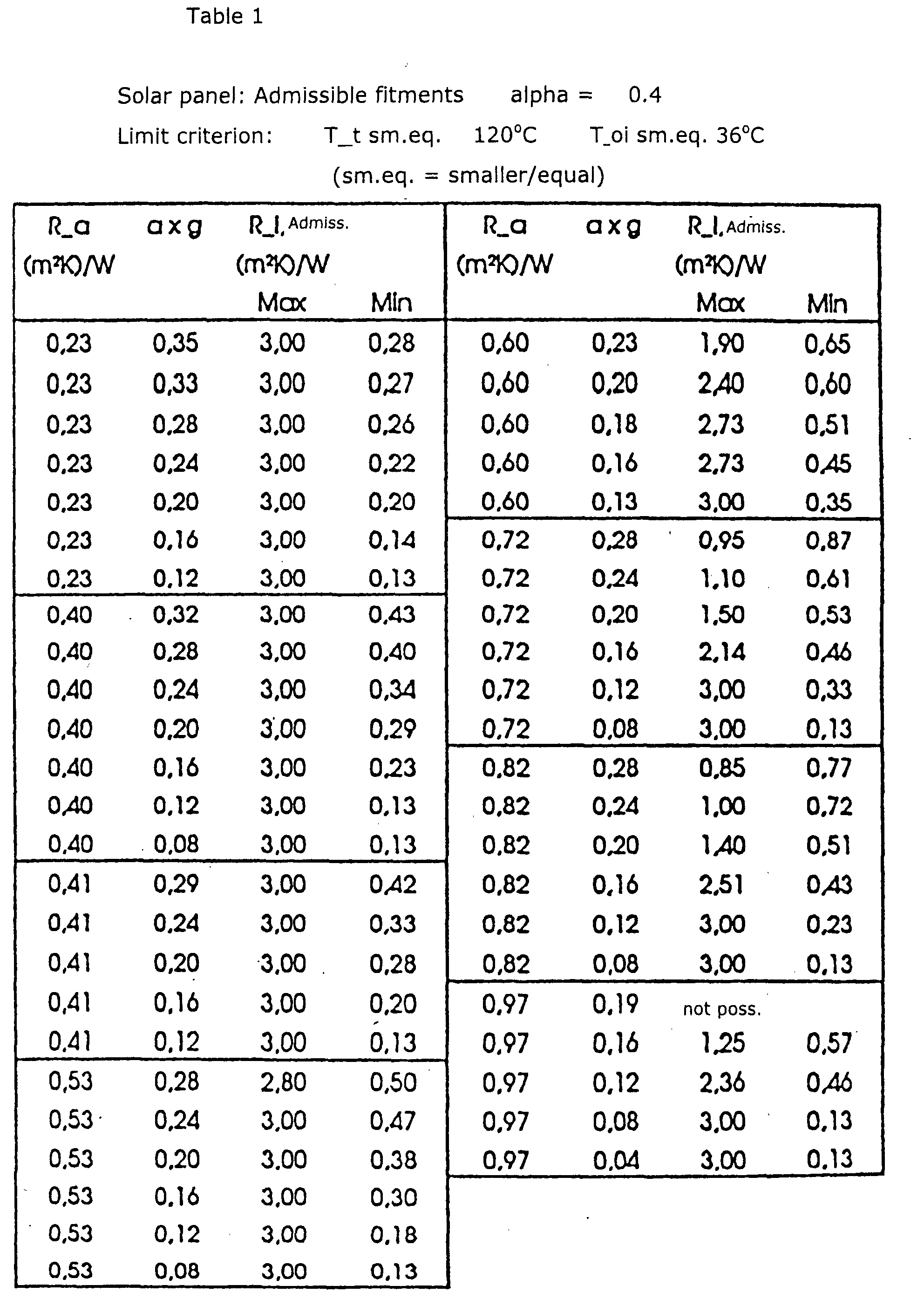 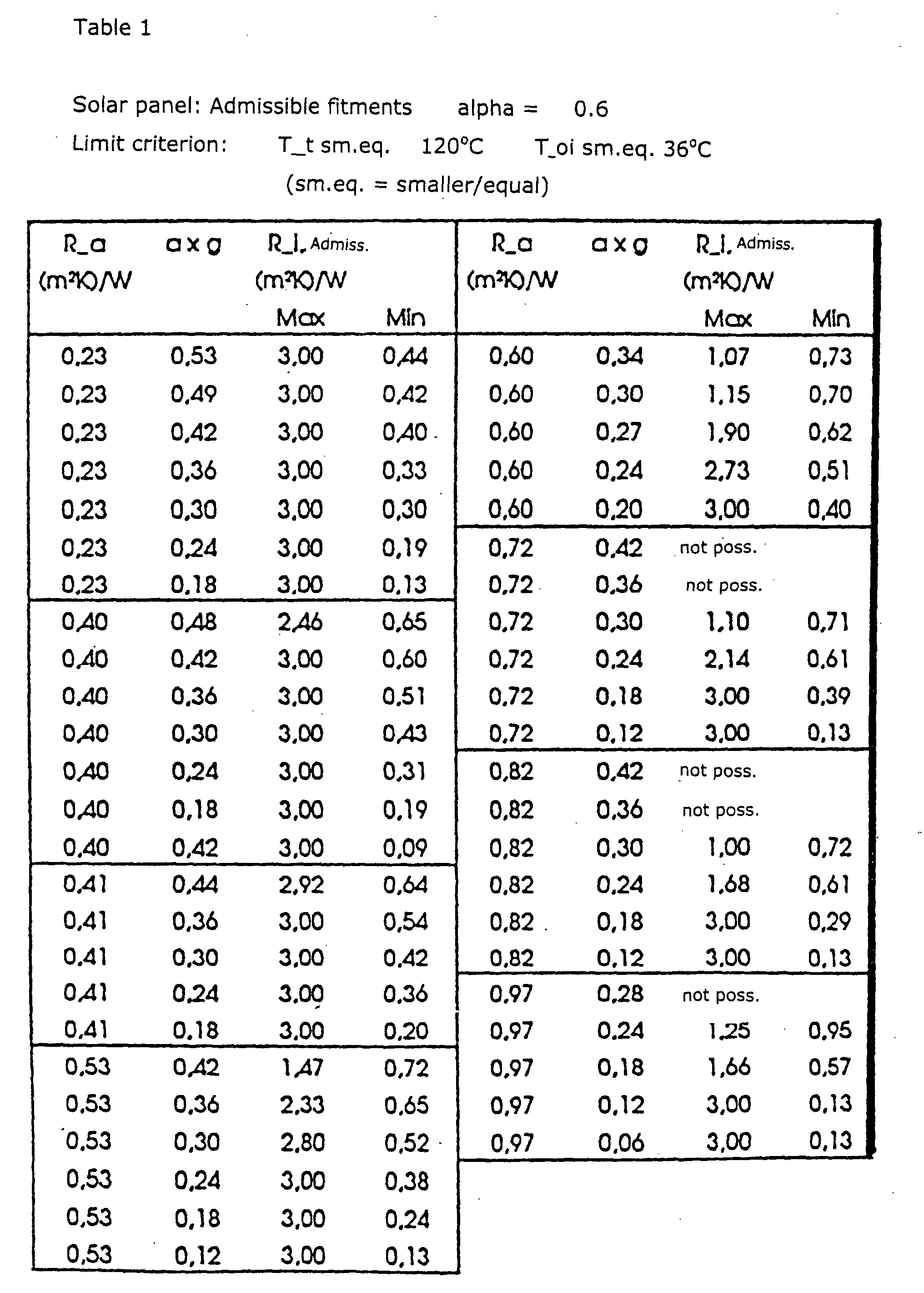 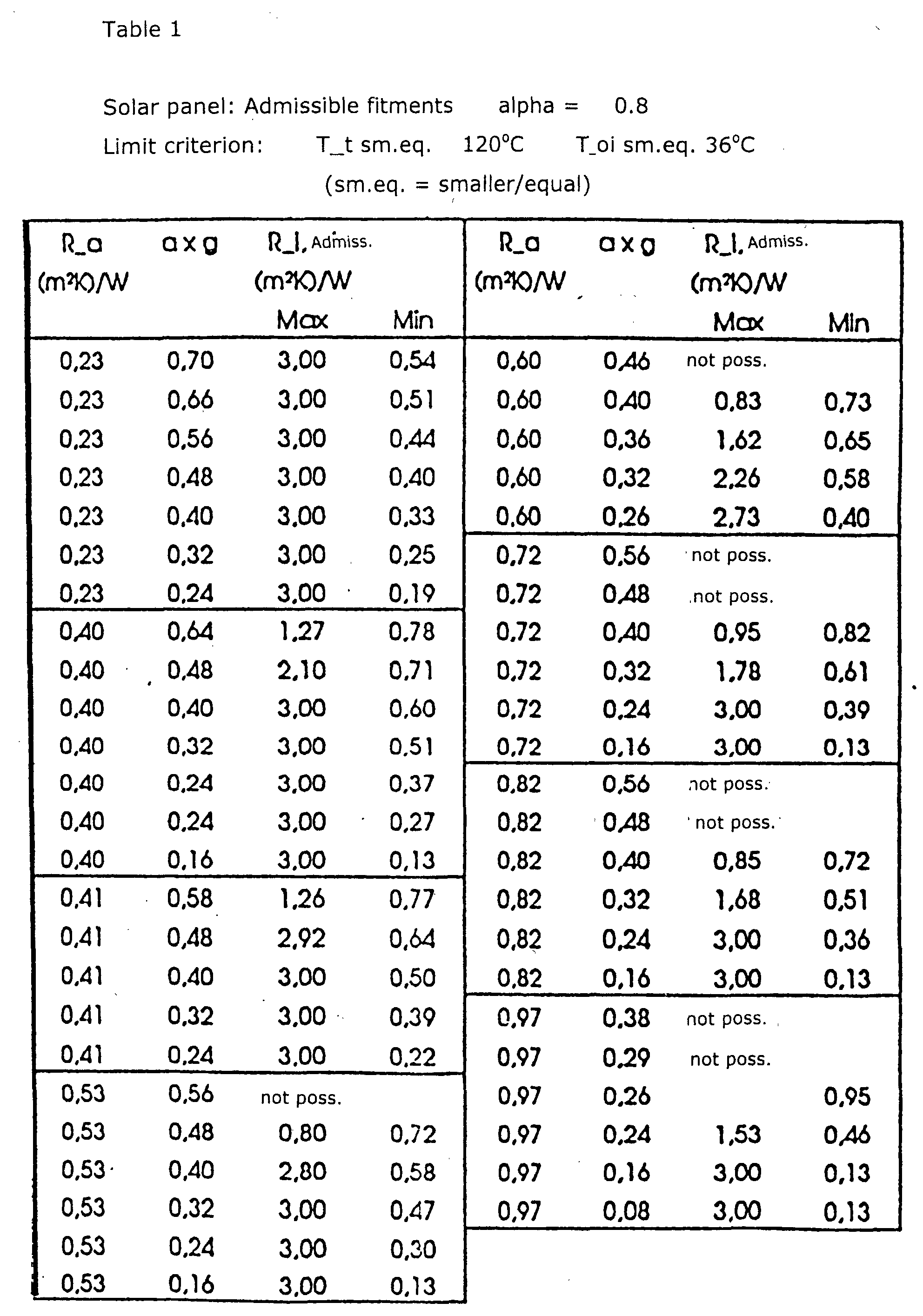 wherein in the Table for alpha equal to 0.2; 0.4; 0.6 and 0.8 in each case in dependence on Rₐ (first column) and alpha*g (second column) the admissible maximum value (third column) and minimum value (fourth column) are combined together for Rᵢ and intermediate values can be readily ascertained by interpolation.

3. An outside wall structure according to claim 2 **characterised in that** the wall structure has values of alpha*g and Rₐ listed in the table hereinafter (Table 2) as well as an Rᵢ-value which is in the Rᵢ-range specified in Table 2 and respectively associated with those values of alpha*g and Rₐ:

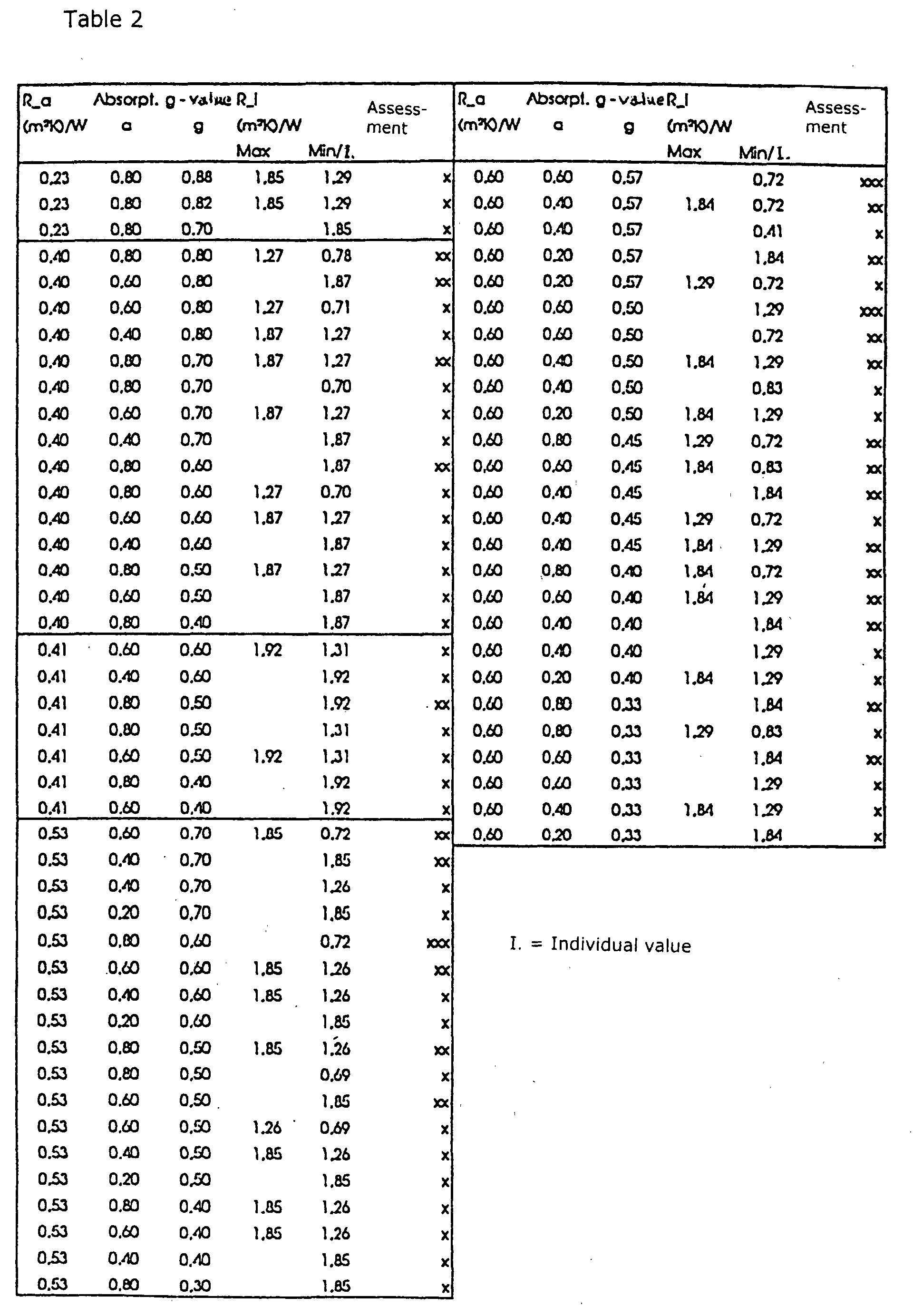

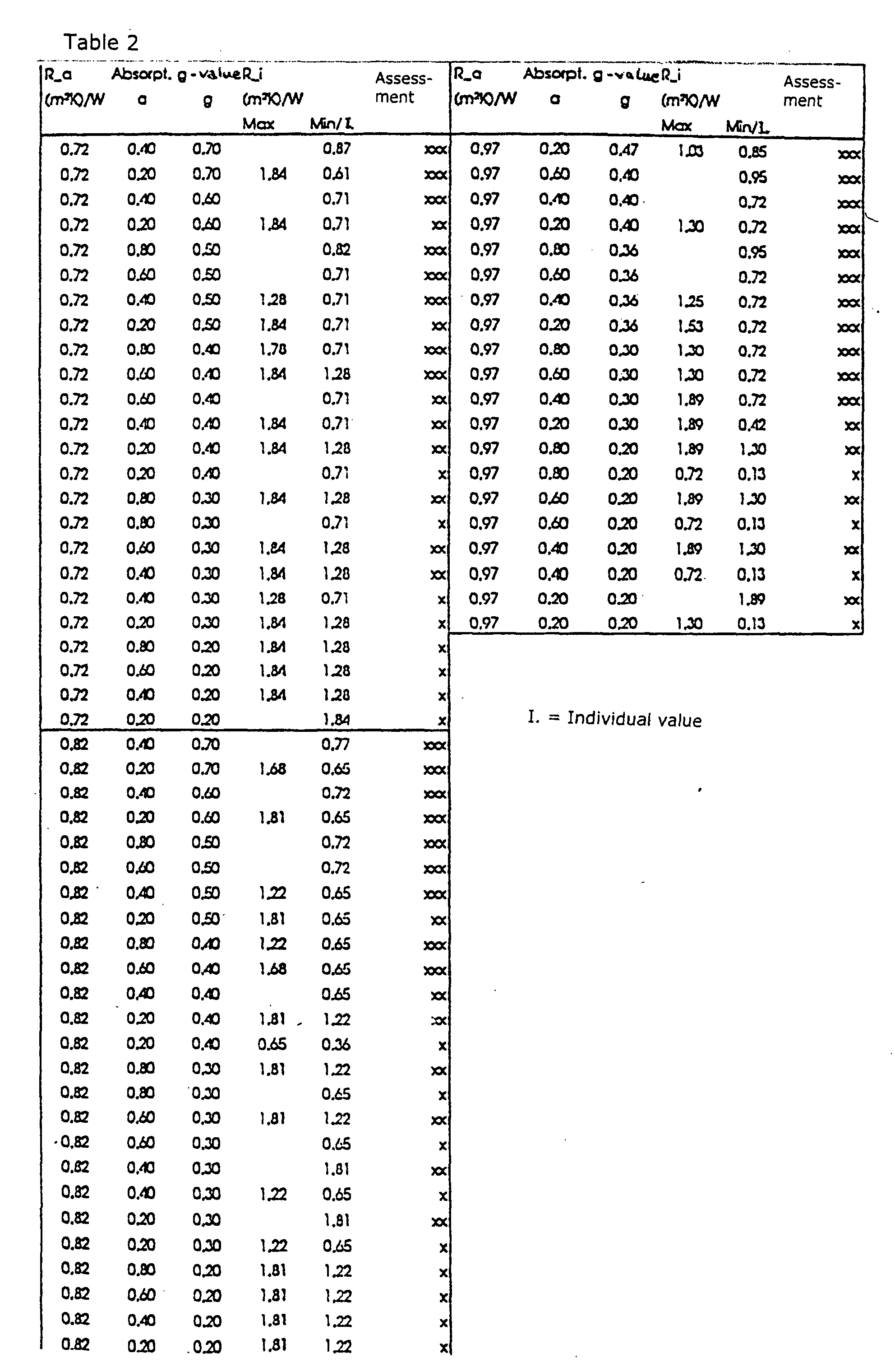

4. An outside wall structure according to one of claims 2 and 3 **characterised in that** with the mutual matching of the parameters Rₐ, Rᵢ, alpha and alpha*g the highest possible value qₛₘₐₓ to be expected in respect of solar radiation is fixed for that direction which corresponds to the directional orientation of the outside wall structure on the building.

5. An outside wall structure according to one of claims 1 to 4 **characterised in that** the colour and/or structural design is formed by a coating on the interface (6).

6. An outside wall structure according to one of claims 1 to 4 **characterised in that** the colour and/or structural design is formed by a surface finishing treatment of the interface (6).

7. An outside wall structure according to one of claims 1 to 6 **characterised in that** on its surface towards the outer heat insulating layer (5) the interface (6) has a substantially flat item (7) as a carrier for the colour and/or structural design.

8. An outside wall structure according to claim 7 **characterised in that** the substantially flat item (7) comprises a sheet, a plate, a pane or a foil.

9. An outside wall structure according to one of claims 1 to 8 **characterised in that** the colour design is formed by monochromatic or polychromatic colour areas or regions.

10. An outside wall structure according to one of claims 1 to 9 **characterised in that** the structural design is formed by a surface shaped in a relief-like fashion.

## Revendications

1. Elément de mur extérieur pour des bâtiments, notamment panneau, dans lequel, pour utiliser l'énergie solaire, une couche (5) extérieure d'isolation thermique est disposée entre une paroi intérieure (2) et une paroi extérieure (1) du mur, perméable au rayonnement solaire, largement transparente, laquelle couche extérieure d'isolation thermique est également perméable au rayonnement solaire, jouxte ladite paroi extérieure et est séparée d'une couche intérieure (3) d'isolation thermique liée à la paroi intérieure (2) du mur par une interface (6) absorbant le rayonnement solaire reçu de la couche extérieure (5) d'isolation thermique, **caractérisé en ce que** l'interface (6), au niveau de sa surface tournée vers la couche extérieure (5) d'isolation thermique présente un agencement de couleur et/ou de structure, qui peut être choisi librement en fonction de critères de construction ou esthétiques, et qui détermine l'aspect visuel de l'élément de mur extérieur, vu de l'extérieur par rapport à la paroi extérieure (1) du mur.

2. Elément de mur extérieur selon la revendication 1, dans lequel l'interface (6) absorbe une fraction alpha du rayonnement solaire sortant de la couche extérieure (5) d'isolation thermique, la somme R_{g} de la résistance thermique Rₐ, formée de la paroi extérieure (1) du mur et de couche extérieure (5) d'isolation thermique, et de la résistance thermique Rᵢ, formée de la paroi intérieure (2) du mur avec sa couche intérieure (3) d'isolation thermique, ayant une valeur minimale R_{gmin} qui est suffisamment élevée pour que, en l'absence de rayonnement solaire et de la température d'air extérieur minimale attendue (hiver/nuit), la température au niveau de la surface de paroi intérieure de l'élément de mur ne soit pas inférieure à une valeur minimale en ce qui concerne le confort et le risque de condensation, **caractérisé en ce que** la résistance thermique Rₐ, formée de la paroi extérieure (1) du mur et de la couche extérieure (5) d'isolation thermique, et son coefficient de transmission thermique global g, le coefficient d'absorption alpha au niveau de l'interface (6) et la résistance thermique Rᵢ, formée de la paroi intérieure (2) du mur et de sa couche intérieure (3) d'isolation thermique, sont mutuellement adaptés, de telle sorte que, pour l'ensoleillement maximal qₛₘₐₓ possible et la température extérieure maximale Tₐₘₐₓ possible en été sur le site d'installation, on obtienne à l'intérieur de l'élément de mur, en particulier au niveau de l'interface (6), au plus une température maximale Tₜₘₐₓ pouvant être supportée sans dégradation par les matériaux de l'élément de mur, et au niveau de la surface intérieure du mur, au plus une température maximale Tₒᵢₘₐₓ qui est perçue encore comme agréable par la personne se trouvant à l'intérieur de la pièce, Rᵢ, pour des valeurs données de Rₐ, alpha et alpha*g (* représentant ici et dans ce qui suit le signe de multiplication) d'un élément de mur orienté vers le sud ou vers l'ouest, étant comprise entre les limites indiquées dans le tableau (Tableau 1) ci-après,
le tableau indiquant pour alplha égal à 0,2; 0,4; 0,6; et 0,8, en fonction chaque fois de Rₐ(première colonne) et de alpha*g (deuxième colonne), la valeur maximale (troisième colonne) et la valeur minimale (quatrième colonne) de Rᵢ et des valeurs intermédiaires pouvant être déterminées sans difficulté par interpolation.

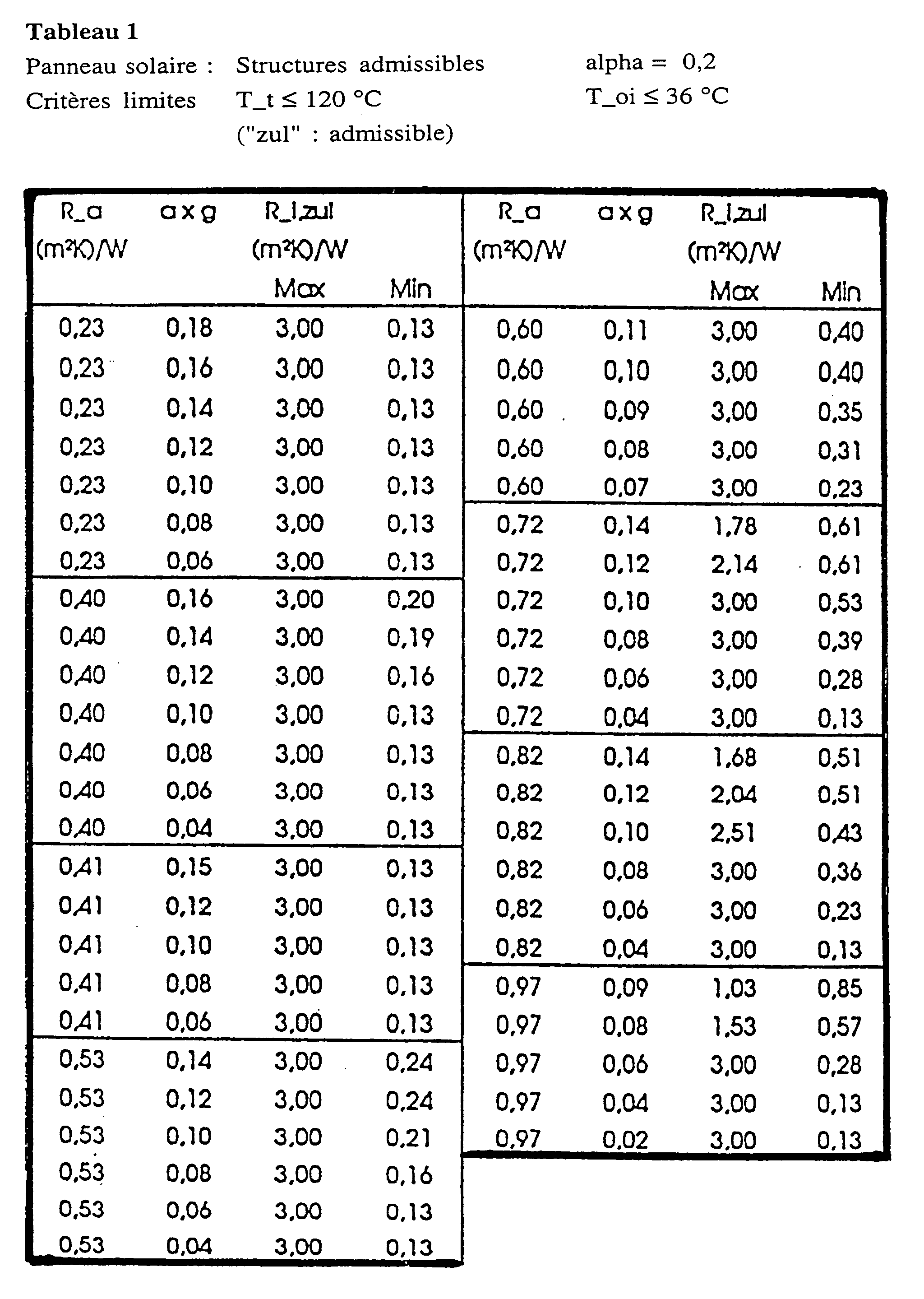

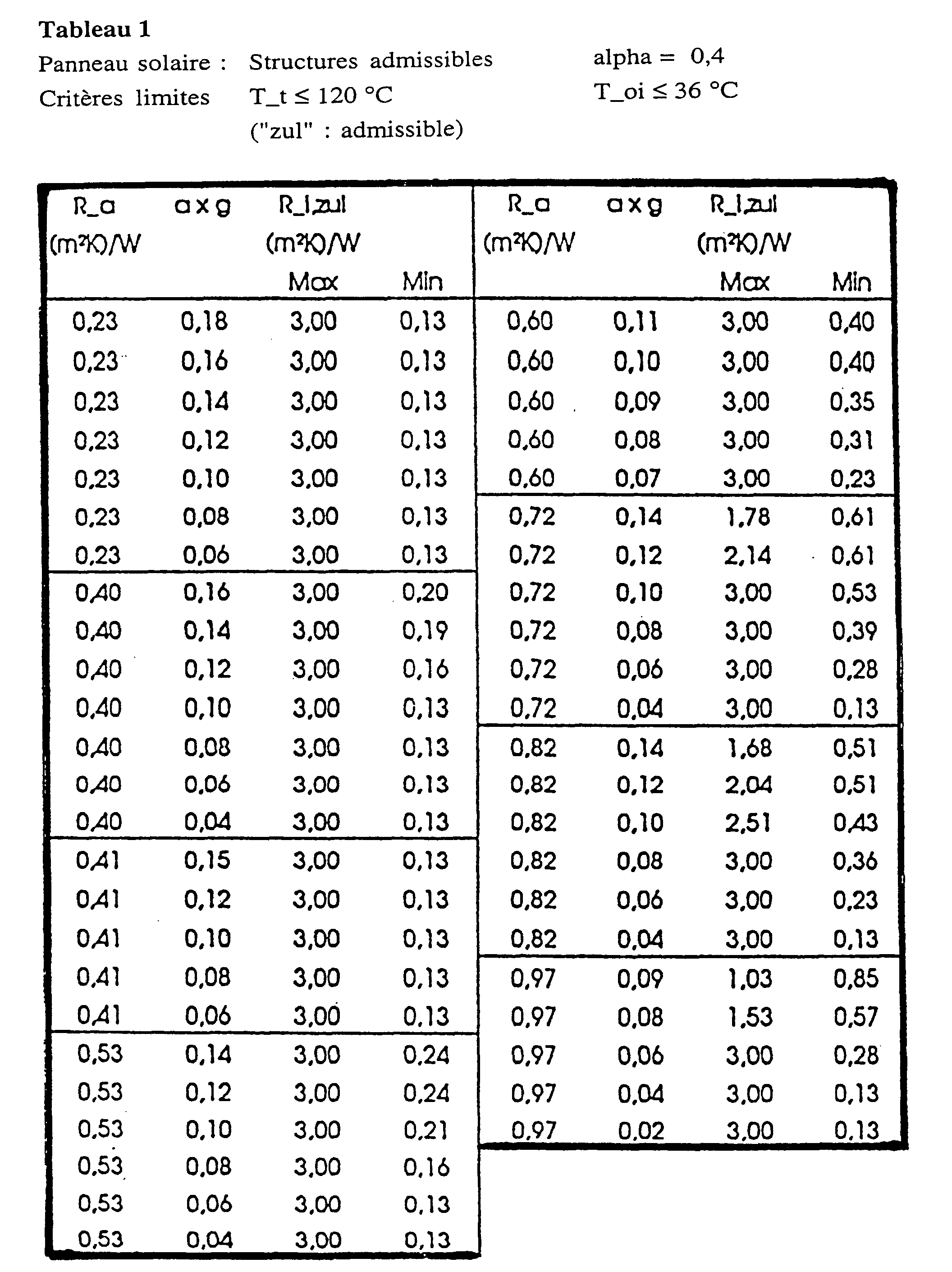

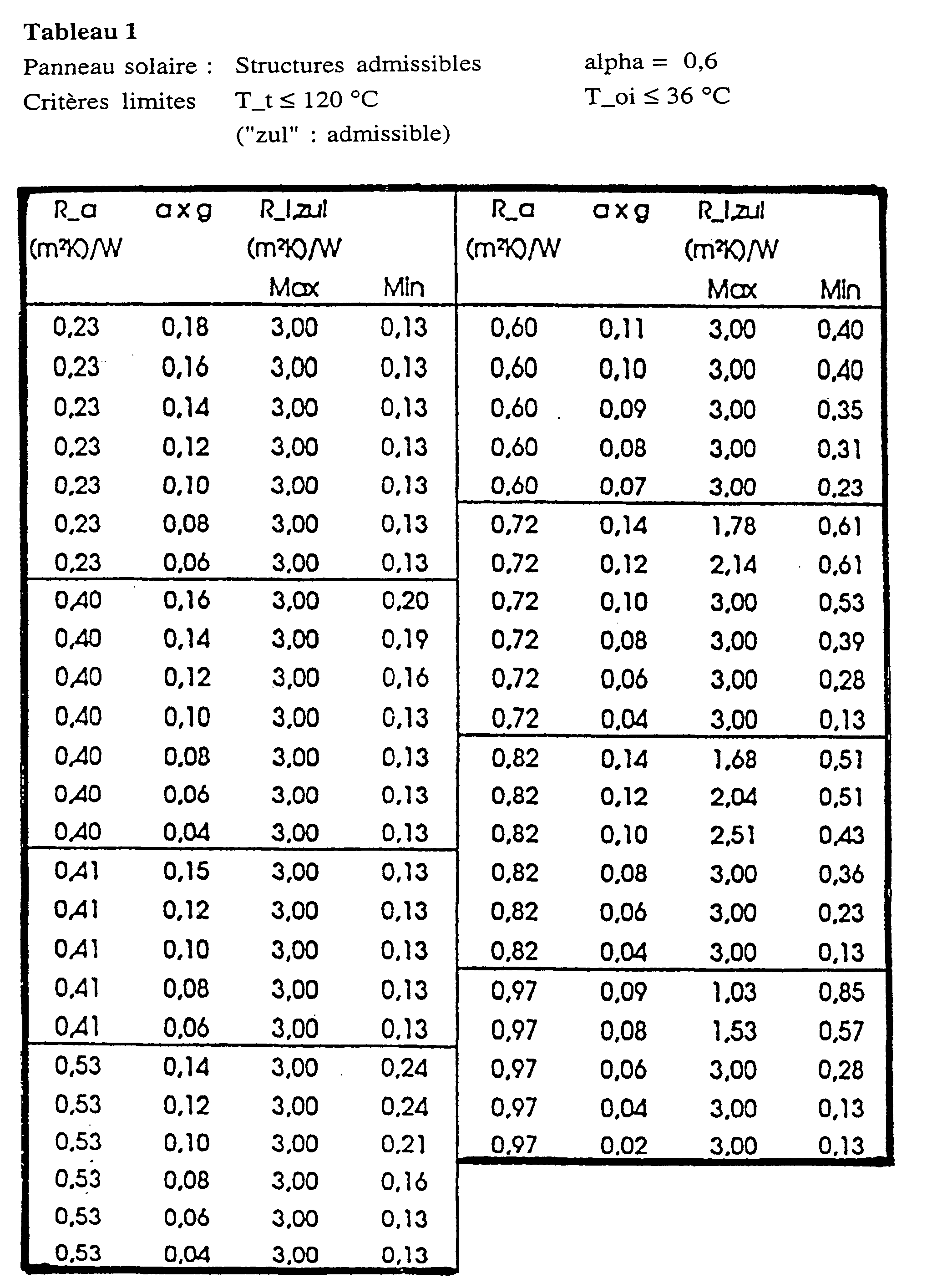

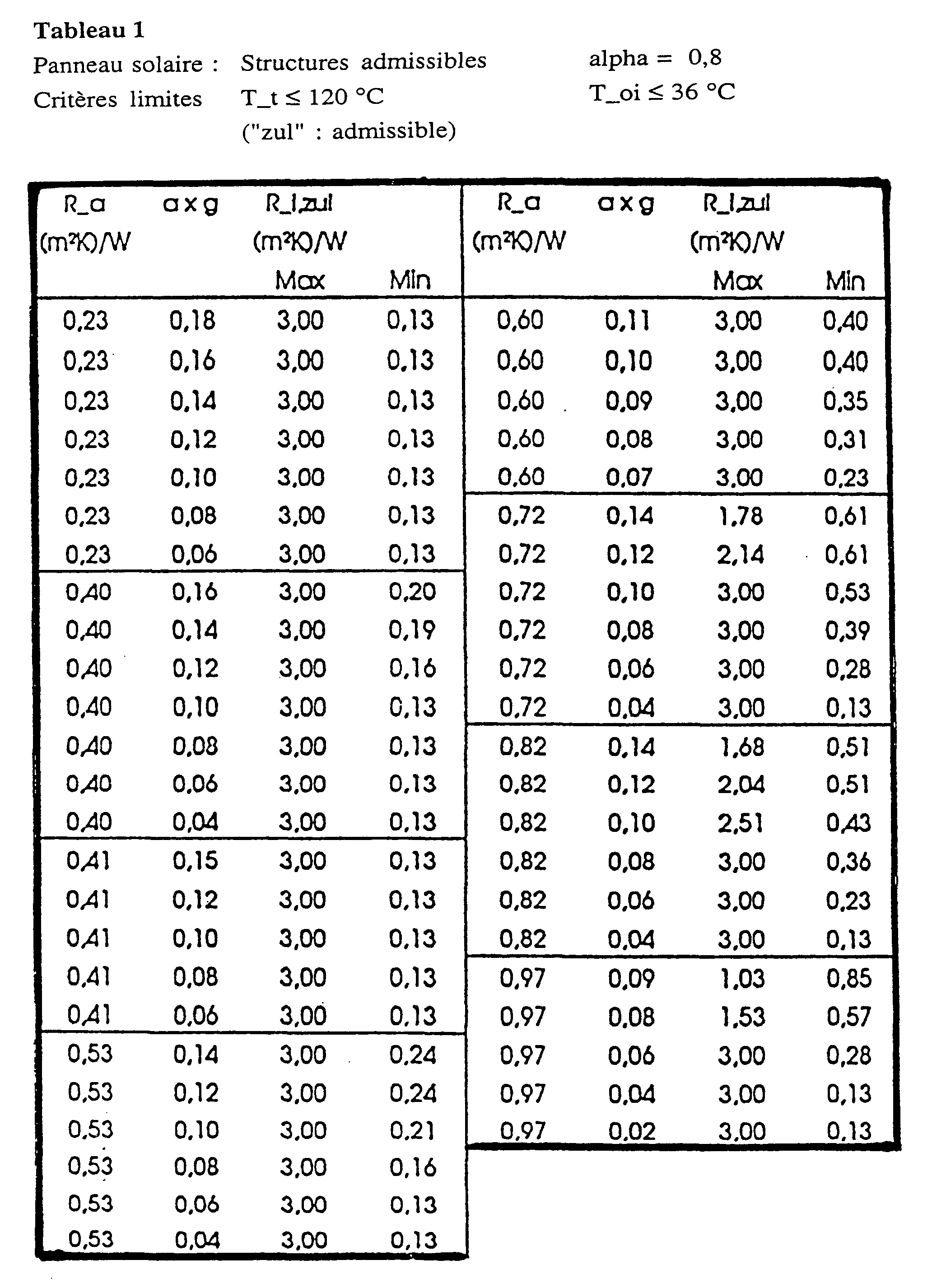

3. Elément de mur extérieur selon la revendication 2, **caractérisé en ce que** l'élément de mur présente les valeurs indiquées dans le tableau ci-après (Tableau 2) pour alpha*g et Rₐ, ainsi qu'une valeur Rᵢ, qui est comprise dans la plage de Rᵢ indiquée dans le tableau, associée à ces valeurs alpha *g et Rₐ :

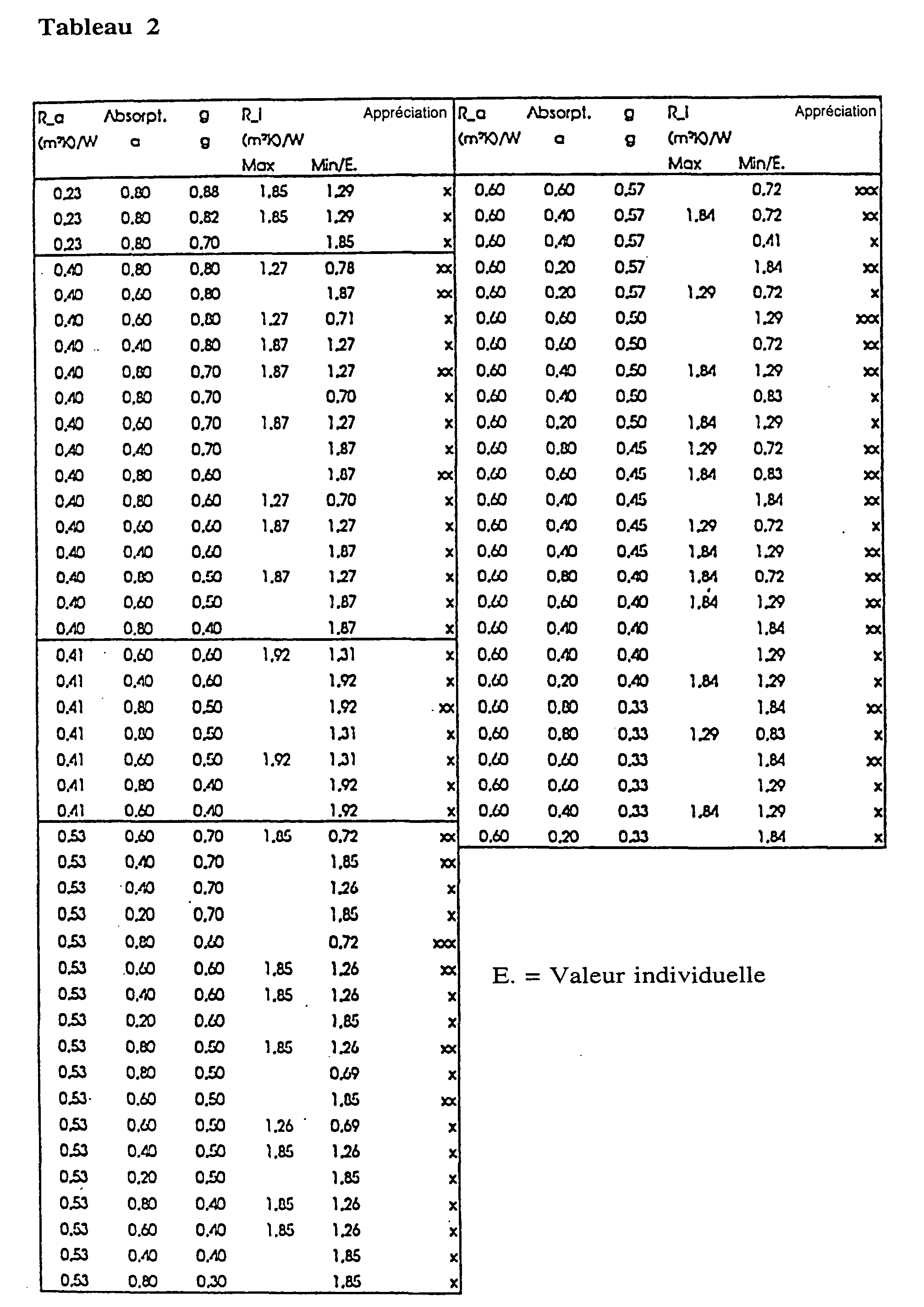

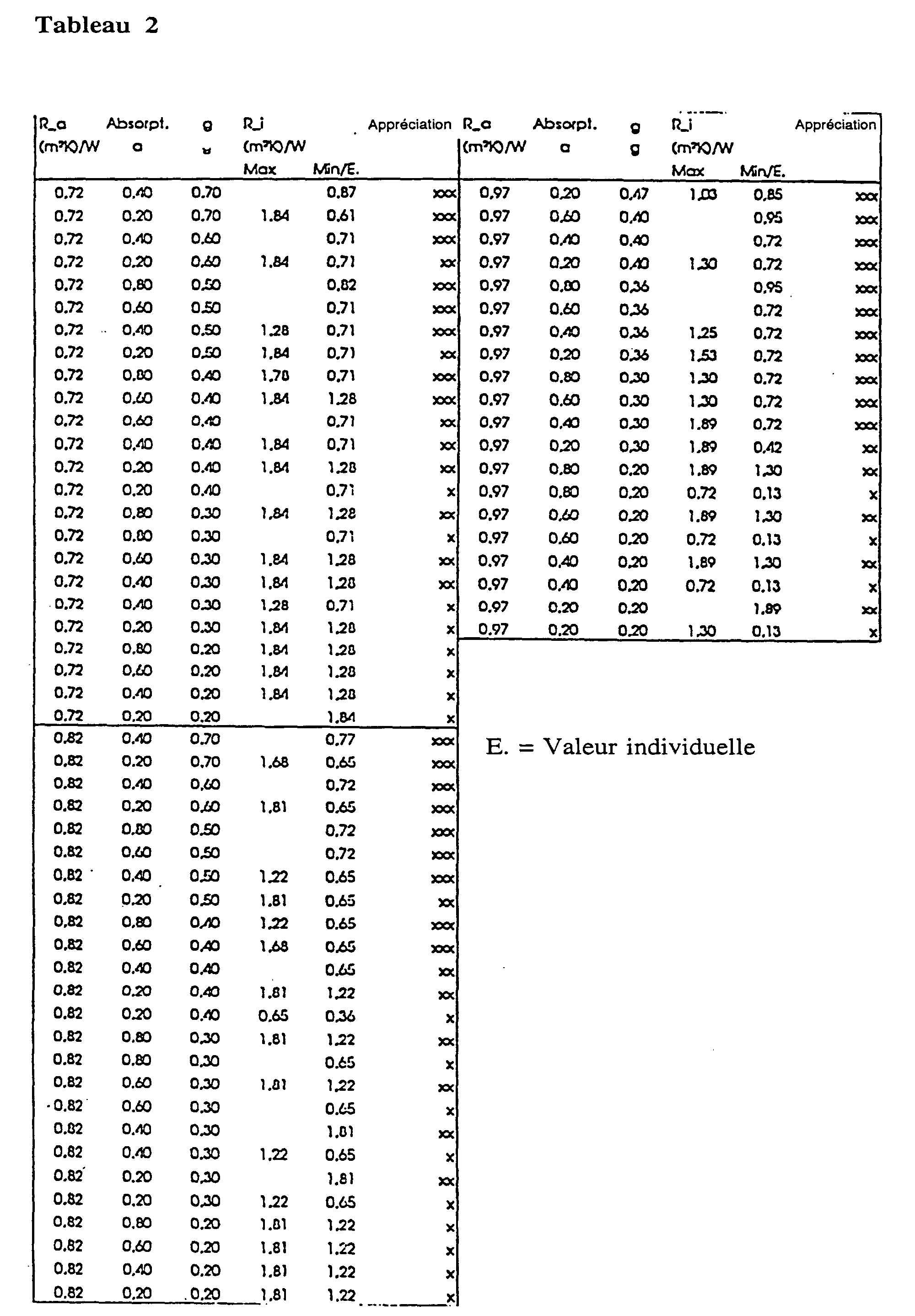

4. Elément de mur extérieur selon une des revendciations 2 ou 3, **caractérisé en ce que** pour l'adaptation réciproque des grandeurs Rₐ, Rᵢ, alpha et alpha*g, on prend la valeur maximale possible qₛₘₐₓ du rayonnement solaire pour la direction dans le ciel qui correspond à l'orientation de l'élément de mur dans le bâtiment.

5. Elément de mur extérieur selon une des revendciations 1 à 4, **caractérisé en ce que** l'agencement de couleur et/ou de structure est formé par un revêtement de l'interface (6).

6. Elément de mur extérieur selon une des revendciations 1 à 4, **caractérisé en ce que** l'agencement de couleur et/ou de structure est formé par un traitement de surface de l'interface (6).

7. Elément de mur extérieur selon une des revendciations 1 à 6, **caractérisé en ce que** l'interface (6), sur sa face tournée vers la couche extérieure (5) d'isolation thermique, comporte un produit essentiellement plat (7) en tant que support de l'agencement de couleur et/ou de structure.

8. Elément de mur extérieur selon la revendication 7, **caractérisé en ce que** le produit (7) essentiellement plat est constitué d'une tôle, d'une plaque, d'une vitre ou d'un film.

9. Elément de mur extérieur selon une des revendciations 1 à 8, **caractérisé en ce que** l'agencement de couleur est formé de champs ou de zones colorés monochromes ou polychromes.

10. Elément de mur extérieur selon une des revendciations 1 à 9, **caractérisé en ce que** l'agencement de structure est formé par un surface pourvue d'un relief.
